# EUROPEAN PATENT SPECIFICATION

(11) **EP 2 262 941 B1**
(45) Date of publication and mention of the grant of the patent: **29.04.2015**
(21) Application number: 09717003.9
(22) Date of filing: 27.02.2009
(51) Int. Cl.: D06F 37/14, D06F 37/06

(54) **DRUM OF A WASHING MACHINE**
WASCHMASCHINENTROMMEL
TAMBOUR DE MACHINE A LAVER

(30) Priority: 03.03.2008 ES 200800678
(43) Date of publication of application: 22.12.2010
(73) Proprietor: BSH Hausgeräte GmbH, 81739 München (DE)
(72) Inventor: GOMEZ CAUDEVILLA, Miguel Angel, 50007 Zaragoza (ES); GRACIA BOBED, Ismael, 50014 Zaragoza (ES); LATRE ABADIA, Roberto, 50014 Zaragoza (ES); MARTINEZ PEREZ, Gerardo, 50015 Zaragoza (ES); MELANTUCHE FUENTE, Juan, 50410 Cuarte de Huerva Zaragoza (ES); RECIO FERRER, Eduardo, 50013 Zaragoza (ES)
(86) International application number: PCT/EP2009/052352
(87) International publication number: WO 2009/109526

(56) References cited:
- EP-A- 1 306 479
- EP-A- 1 529 866
- WO-A-01/61098
- WO-A-2007/062987
- GB-A- 1 161 219
- US-A1- 2005 252 253

## Description

The present invention relates to a drum of a washing machine comprising a cylindrical band, at least two rows of openings defined on the cylindrical band, arranged along a central line between both of them, and at least a blade with a blade base from which at least two corresponding rows of couplings extend, which are fittable into said openings to fasten the blade to the cylindrical band in an interior of said drum, wherein at least one opening has: a bigger area which is big enough to be crossable by the coupling in a position of the blade dismounted from the drum, and a smaller area which is big enough to surround the first end of the rigid element contacting it in the position of the blade mounted on the drum; and wherein at least one coupling has: a rigid element joined to the blade base at a first end and, the rigid element has at its second end at least one flap contactable with a surface of an exterior of the cylindrical band in a position of the blade mounted on the drum.

A drum of a washing machine of this generic type is disclosed in US 2005/0252253 A1.

The use of a washing machine of the rotating-drum type is generally known. In these machines it is usual to utilize a number of, for example three or four, agitating blades projected inwards in the interior of the drum so as to make articles being washed spin during the washing and rinsing operations. Document GB1161219 A illustrates a plastic blade with a substantially triangular cross section with closed ends in order to have a U-form fixed to the drum interior by means of projections, which extend from the blade edge and are held in two rows of cooperating L- slots on the drum wall. The projections are inserted into a wider zone of the L-slot and slide over a narrower zone. In order to interlock them, the blade is screwed on the drum band. A problem of this arrangement of projections consists in the fact that it does not have an immediate interlock between the blade and the drum available and requires an additional joint to fix it. When securing the blade to the cylindrical wall of the drum by means of the projections arranged at the tub edges which fit into the cooperating L-slots on the wall, another fastening element such as a screw will obviously be necessary, as it is described in the prior art, to keep the blade in position after fitting it onto the wall since the projections could just get out of the slots. Patent application ES 2276627 A1 shows a drum of a washing machine comprising a cylindrical band, and at least a blade fastened to the cylindrical band in the interior of said drum by means of two corresponding rows of elastic couplings, which extend from the blade and are held in receptacles at the cylindrical band of the drum. The receptacles have a protuberance extending into said receptacle so as to slide said elastic couplings by flexing them, and a fastening part to secure said couplings. This type of blade coupling continues needing an additional fastening means, since the couplings still have clearance and may vibrate producing noise if they are not additionally fastened to the band when the receptacle flexes the couplings and a second zone of the receptacle is entered.

As a consequence of this, it is the object of the present invention to offer an improved drum of a washing machine in which the openings may secure and retain the blade couplings in position respectively, even without the aid of the fastening elements such as fixing screws, rivets, etc.

Another object of the present invention is to offer a drum of a washing machine with blades with no potential relative movement between them and the drum to reduce the noise made by this movement.

According to the present invention, the above-mentioned objects are achieved with an improved drum of a washing machine comprising a cylindrical band, at least two rows of openings defined on the cylindrical band, arranged along a central line between both of them, and at least a blade with a blade base from which at least two corresponding rows of couplings extend, which are fittable into said openings to fasten the blade to the cylindrical band in an interior of said drum, wherein at least one opening has: a bigger area which is big enough to be crossable by the coupling in a position of the blade dismounted from the drum, and a smaller area which is big enough to surround the first end of the rigid element contacting it in the position of the blade mounted on the drum; and wherein at least one coupling has: a rigid element joined to the blade base at a first end and, the rigid element has at its second end at least one flap contactable with a surface of an exterior of the cylindrical band in a position of the blade mounted on the drum, wherein further at least one opening has a cut-out located at the smaller area and extending outwards from the opening, and an elastic retaining element is provided at the rigid element fittable into the cut-out in the position of the blade mounted on the drum.

The central line between both rows is substantially parallel to the drum rotation axis.

The cut-out includes a cross section substantially of a triangle and a rectangle.

The blade also comprises a hollow body opened towards the band at the blade base and a plurality of inner ribs located inside the body.

At least one screw hole is defined at one end of one of said ribs, wherein a screw is housable in a corresponding opening defined on said cylindrical band in case any coupling breaks and the blade needs to be secured.

Additionally, a tab is provided extending inwards from said cylindrical band and is fittable with one of the ribs, additionally securing thereby the blade to the drum in its longitudinal movement.

Furthermore, a plurality of outlets is defined on a top side of the blade to obtain a rain effect in the washing process.

The total length of the blade is smaller than a distance between two circular end walls of the drum so that it may be mounted by displacing it in the central line direction from the non-mounted position to the mounted position.

The blade is made of plastic, what simplifies and makes its manufacture cheaper.

When the blade is mounted on the drum, the blade couplings are inserted through the openings' bigger area in a non-mounted position and are slid towards the opening's smaller area by flexing the elastic retaining element until this fits into the cut-out without the need for the coupling to flex. The coupling's connection body may be rigid and strong from its base up to its end, so that it does not break and has no clearance in the opening's smaller area to prevent the blade from vibrating and so that they are fastened firmly at the openings' fastening part respectively. With this configuration of blade couplings, it is avoided that the blade moves backwards or dismounts. The additional flap may be arranged at a coupling with o without an elastic retaining element.

The figures show:
- **Fig. 1**: is a perspective view of a blade and the part of the washing machine drum on which it has to be secured;
- **Fig. 2**: shows a detailed perspective view of a coupling of the blade according to Fig. 1;
- **Fig. 3**: shows a section of a blade with a side view of a coupling according to figure 2;
- **Fig. 4**: shows the mounting positions of a coupling of the blade before being coupled and being coupled;
- **Fig. 5**: is a perspective view of the blade set mounted within a washing machine drum.

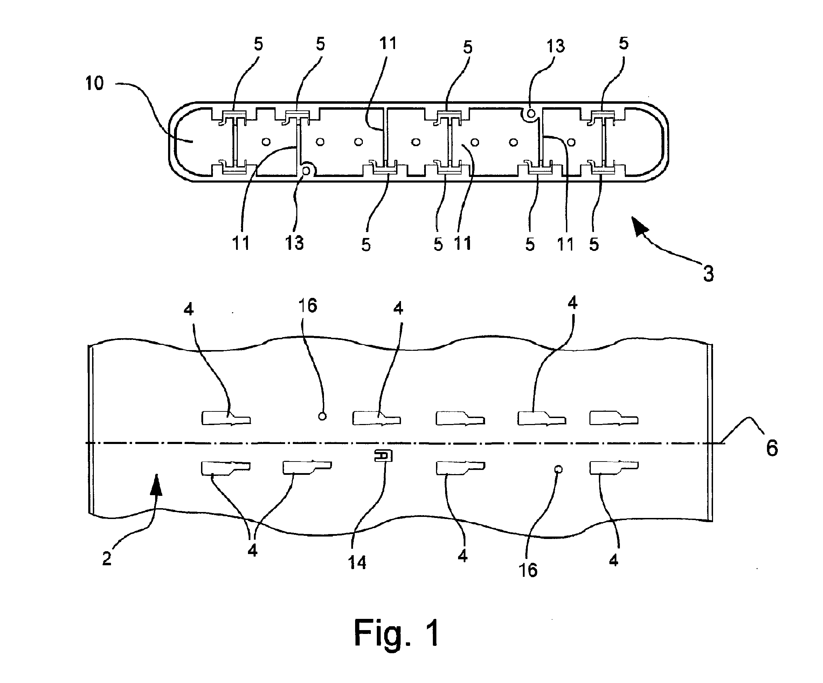

With reference to **Fig. 1****,** a washing machine drum 1 for a washing machine, dryer or the like, of the drum type comprises a cylindrical band 2 and at least a blade 3 fixed in an interior of the drum 1. At least two rows of openings 4 are defined on said band 2 to receive correspondingly two rows of couplings 5 which extend from the blade 3. If the blade is of a small size in the form of a tooth, it may have even only a coupling 5 that fits into an opening. In the present embodiment, blade 3 is long with two rows of couplings, one on each side of a central line 6 parallel to the rotation axis of drum 1, the same number of openings being defined on both sides of the central line 6, although this is not necessary. Alternatively, the central line 6 may not be parallel to the drum rotation axis, whereby a different number of openings may be defined on both sides of the central line 6 provided that the openings 4 defined on the band 2 comply with the requisites regarding mechanical property to fasten the blade 3 to the band 2 reliably.

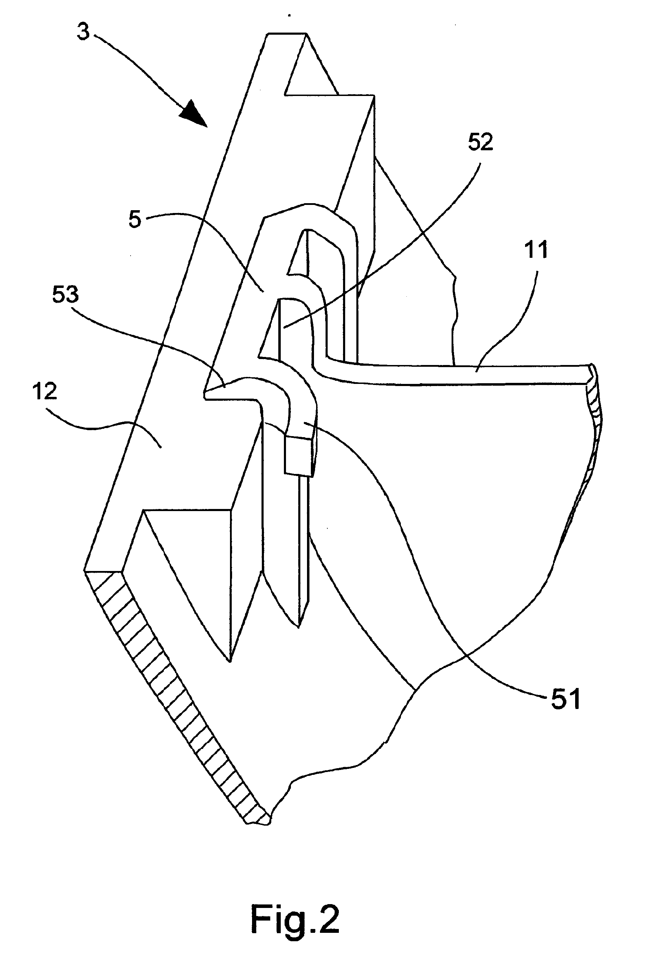

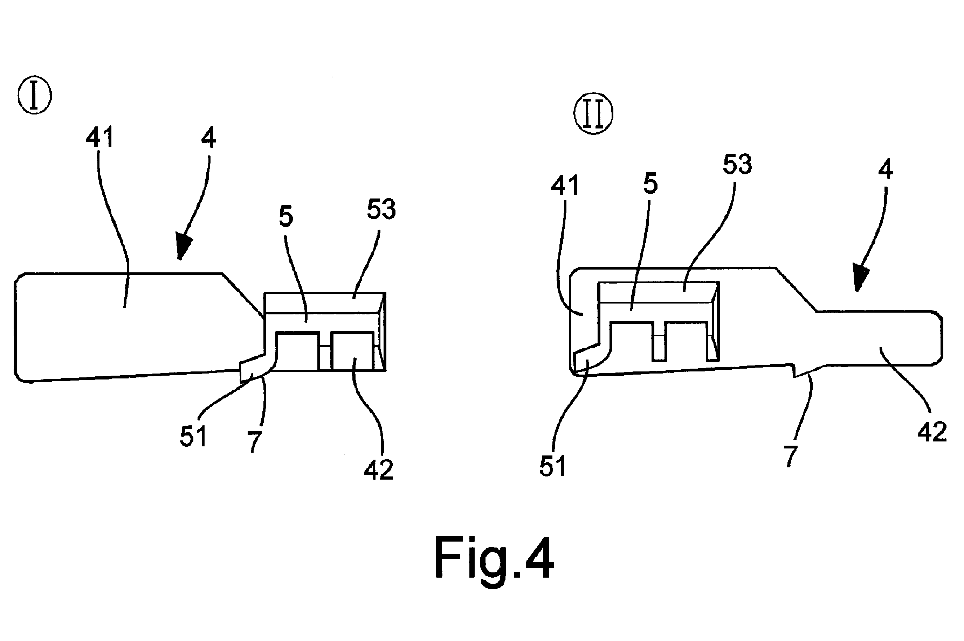

**Fig. 2** shows a perspective view of a part of the blade where the coupling is located. On the blade base 12 which is closest to the drum in mounting position I (fig. 4), the couplings 5, which have a rigid axis 52, project from the one end up to their other end, the latter ending in a flap 53 which contacts the outer face of the drum band in the blade's mounted position **II** (fig. 4). An elastic retaining element 51, which may be bent by applying a force, projects from the coupling's rigid part 52.

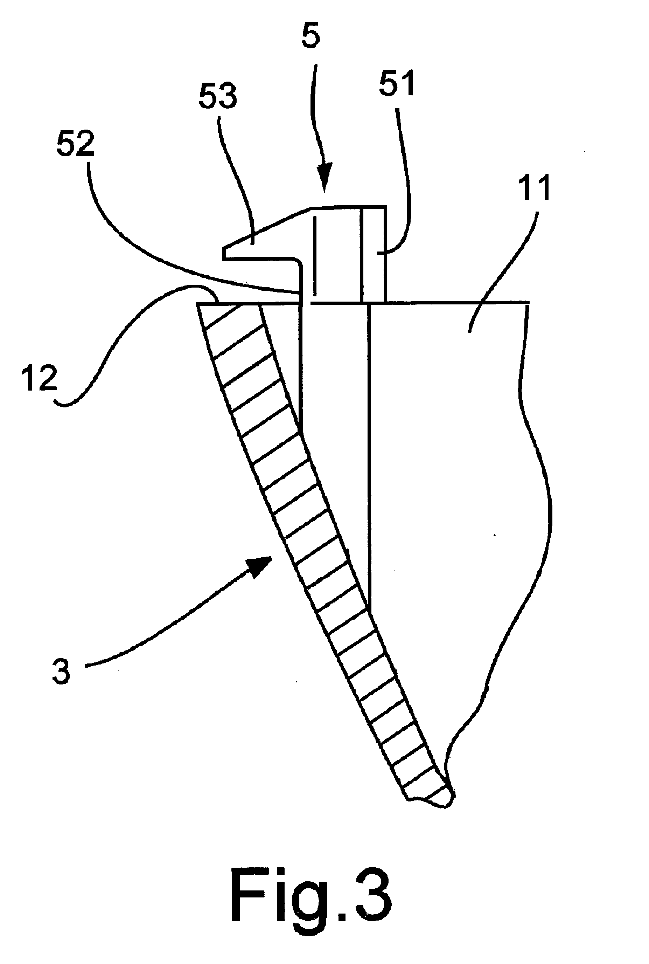

**Fig. 3** shows a side view of a coupling, wherein you may observe the slot between the coupling flap 53 and the blade base 12 where the drum band is introduced.

With reference to **Fig. 4****,** each one of the openings 4 also comprises a cut-out 7 projecting outwards at each one of the openings 4, dividing each one of the openings 4 into a bigger area 41 which is big enough to be crossable by the coupling 5 in a position of dismounted blade **II,** and a smaller area 42 where the cut-out 7 is located, which is big enough to surround the first end of the rigid element 52 of coupling 5 contacting it in the position of blade mounted on the drum I. The opening edge forms at its bigger area a slope ending in the cut-out 7 to facilitate that the elastic retaining element 51 bends until it is inserted in the cut-out. Said cut-out 7 includes a cross section of a triangle and a rectangle which follows the form of the elastic retaining element 51 and where, in a mounted position II, the elastic retaining element 51 of the coupling 5 fits in.

As it is shown in Fig. 1, blade 3 also comprises a hollow body 10 opened towards the cylindrical band 2 at the zone where the blade 3 is fastened, a plurality of parallel inner ribs 11 located in the hollow body 10 to increase the rigidity of blade 3 and an end of each inner rib 11 having a blade base 12 which extends from an interior of blade 3. When the blade 3 is mounted on the drum 1, the openings 4 will be covered with the blade base 12 respectively. Preferably, at least one screw hole 13 is arranged at one end opposed to the blade base 12 of the inner ribs 11 to house a fixing element, such as a screw, in a corresponding opening 16 of the cylindrical band 2 with the aim of obtaining a better fixation of blade 3 on the cylindrical band 2 in case any coupling breaks due to its use. Furthermore, at least one tab 14 extends inwards along one of both rows of openings 4 to fit with one of the inner ribs 11 and prevent blade 3 from moving backwards once mounted so as to reinforce the joint, should this be necessary.

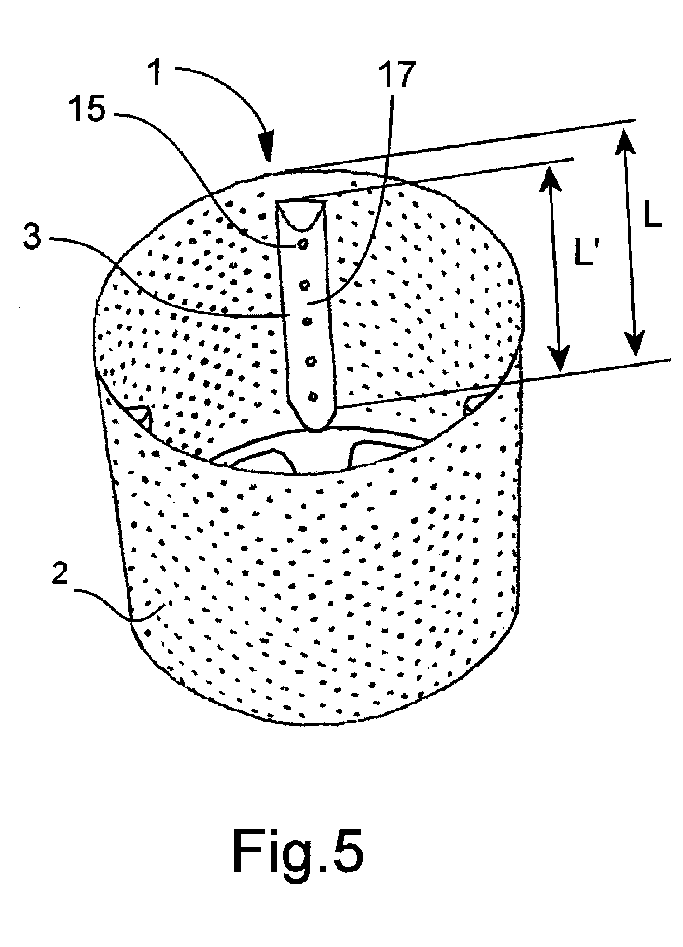

Furthermore, in order to obtain the so-called "rain effect", meaning that, after having been led upwards by the blade 3, the water falls in a shower manner in an improved way so as to wet the washed articles, a plurality of outlets 15 is arranged on a top side 17 of blade 3, as it is shown in **Fig. 5****.**

Furthermore, as it is shown in Fig. 5, the total length L' of blade 3 is smaller than distance L between two circular end walls of drum 1, whereby it is no longer necessary to retain articles which are being washed.

## Claims

1. A drum of a washing machine comprising
- a cylindrical band (2),
- at least two rows of openings (4) defined on the cylindrical band (2), arranged along a central line (6) between both of them and
- at least a blade (3) with a blade base (12) from which at least two corresponding rows of couplings (5) extend, which are fittable into said openings (4) to fasten the blade (3) to the cylindrical band (2) in an interior of said drum,
wherein at least one opening (4) has:
- a bigger area (41) which is big enough to be crossable by the coupling (5) in a position of the blade (3) dismounted from the drum (II) and
- a smaller area (42) which is big enough to surround the first end of the rigid element (52) contacting it in the position of the blade (3) mounted on the drum (I), and wherein at least one coupling (5) has:
- a rigid element (52) joined to the blade base (12) at a first end and,
- the rigid element (52) has at its second end at least one flap (53) contactable with a surface of an exterior of the cylindrical band (2) in a position of the blade (3) mounted on the drum (I), **characterized in that**
- at least one opening (4) has a cut-out (7) located at the smaller area (42) and extending outwards from the opening (4) and
- an elastic retaining element (51) is provided at the rigid element (52) fittable into the cut-out (7) in the position of the blade (3) mounted on the drum (I).

2. The drum of a washing machine according to claim 1, **characterized in that** the cut-out (7) includes a cross section substantially of a triangle and a rectangle.

3. The drum of a washing machine according to one of the preceding claims, **characterized in that** said blade (3) also comprises a hollow body (10) opened towards the band (2) at the base of blade (3) and a plurality of inner ribs (11) located inside the body (10).

4. The drum of a washing machine according to claim 3, **characterized in that** at least one screw hole (13) is defined at one end of one of said ribs (11), wherein a screw is housable in a corresponding opening (16) defined on said cylindrical band (2).

5. The drum of a washing machine according to one of claims 3 and 4, **characterized in that** a tab (14) extends inwards from said cylindrical band (2) being fittable with one of the ribs (11).

6. The drum of a washing machine according to one of the preceding claims, **characterized in that** a plurality of outlets (15) is defined on a top side (17) of said blade (3) to obtain a rain effect in the washing process.

7. The drum of a washing machine according to one of the preceding claims, **characterized in that** a total length of the blade (3) is smaller than a distance between two circular end walls of the drum.

8. The drum of a washing machine according to one of the preceding claims, **characterized in that** said blade (3) is made of plastic.

## Patentansprüche

1. Trommel einer Waschmaschine, welche umfasst:
- ein zylindrisches Band (2),
- mindestens zwei Reihen von in dem zylindrischen Band (2) definierten Öffnungen (4), die entlang einer zwischen ihnen verlaufenden Mittellinie (6) angeordnet sind, und
- mindestens eine Schaufel (3) mit einer Schaufelbasis (12), von welcher aus sich mindestens zwei entsprechende Reihen von Kupplungen (5) erstrecken, welche in die Öffnungen (4) einsetzbar sind, um die Schaufel (3) an dem zylindrischen Band (2) in einem Inneren der Trommel zu befestigen,
wobei mindestens eine Öffnung. (4) aufweist:
- eine größere Fläche (41), welche ausreichend groß ist, um von der Kupplung (5) in einer von der Trommel abmontierten Position (II) der Schaufel (3) durchquert werden zu können, und
- eine kleinere Fläche (42), welche ausreichend groß ist, um das erste Ende des starren Elements (52), mit dem sie sich in der an der Trommel montierten Position (I) der Schaufel (3) in Kontakt befindet, zu umgeben, und
wobei mindestens eine Kupplung (5) aufweist:
- ein starres Element (52), das an einem ersten Ende mit der Schaufelbasis (12) verbunden ist, und
- wobei das starre Element (52) an seinem zweiten Ende mindestens eine Lasche (53) aufweist, die in einer an der Trommel montierten Position (I) der Schaufel (3) mit einer Oberfläche einer Außenseite des zylindrischen Bandes (2) in Kontakt gebracht werden kann, **dadurch gekennzeichnet, dass**
- mindestens eine Öffnung (4) einen Ausschnitt (7) aufweist, der an dem kleineren Bereich (42) angeordnet ist und sich von der Öffnung (4) aus nach außen erstreckt, und
- ein elastisches Halteelement (51) an dem starren Element (52) vorgesehen ist, das in der an der Trommel montierten Position (I) der Schaufel (3) in den Ausschnitt (7) einsetzbar ist.

2. Trommel einer Waschmaschine nach Anspruch 1, **dadurch gekennzeichnet, dass** der Ausschnitt (7) einen Querschnitt im Wesentlichen eines Dreiecks und eines Rechtecks aufweist.

3. Trommel einer Waschmaschine nach einem der vorhergehenden Ansprüche, **dadurch gekennzeichnet, dass** die Schaufel (3) außerdem einen Hohlkörper (10), der zu dem Band (2) an der Basis der Schaufel (3) hin geöffnet ist, und mehrere innere Rippen (11), die im Inneren des Körpers (10) angeordnet sind, umfasst.

4. Trommel einer Waschmaschine nach Anspruch 3, **dadurch gekennzeichnet, dass** mindestens ein Schraubenloch (13) an einem Ende einer der Rippen (11) definiert ist, wobei eine Schraube in einer entsprechenden Öffnung (16) aufgenommen werden kann, die in dem zylindrischen Band (2).definiert ist.

5. Trommel einer Waschmaschine nach einem der Ansprüche 3 und 4, **dadurch gekennzeichnet, dass** sich eine Lasche (14) von dem zylindrischen Band (2) aus nach innen erstreckt, die mit einer der Rippen (11) in Eingriff gebracht werden kann.

6. Trommel einer Waschmaschine nach einem der vorhergehenden Ansprüche, **dadurch gekennzeichnet, dass** mehrere Auslässe (15) an einer Oberseite (17) der Schaufel (3) definiert sind, um einen Regeneffekt in dem Waschprozess zu erzielen.

7. Trommel einer Waschmaschine nach einem der vorhergehenden Ansprüche, **dadurch gekennzeichnet, dass** eine Gesamtlänge der Schaufel (3) kleiner als ein Abstand zwischen zwei kreisförmigen Stirnwänden der Trommel ist.

8. Trommel einer Waschmaschine nach einem der vorhergehenden Ansprüche, **dadurch gekennzeichnet, dass** die Schaufel (3) aus Kunststoff hergestellt ist.

## Revendications

1. Tambour de machine à laver comprenant
- une bande cylindrique (2),
- au moins deux rangées d'ouverture (4) définies sur la bande cylindrique (2), agencées le long d'une ligne centrale (6) située entre lesdites deux rangées et
- au moins une pale (3) avec une base de pale (12) à partir de laquelle s'étendent au moins deux rangées correspondantes d'accouplements (5), qui peuvent s'adapter auxdites ouvertures (4) afin de fixer la pale (3) à la bande cylindrique (2) dans un intérieur dudit tambour,
dans lequel au moins une ouverture (4) présente :
- une zone plus grande (41) qui est suffisamment grande pour pouvoir être parcourue par l'accouplement (5) dans une position où la pale (3) est démontée par rapport au tambour (II) et
- une zone plus petite (42) qui est suffisamment grande pour entourer la première extrémité de l'élément rigide (52) venant en contact avec ladite zone dans la position où la pale (3) est montée sur le tambour (I), et
dans lequel au moins un accouplement (5) présente :
- un élément rigide (52) réuni à la base de pale (12) au niveau d'une première extrémité et,
- l'élément rigide (52) présente, au niveau de sa seconde extrémité, au moins un rabat (53) pouvant venir en contact avec une surface d'un extérieur de la bande cylindrique (2) dans une position où la pale (3) est montée sur le tambour (I), **caractérisé en ce que**
- au moins une ouverture (4) présente une découpe (7) située au niveau de la zone plus petite (42) et s'étendant vers l'extérieur à partir de l'ouverture (4) et
- un élément de retenue élastique (51) est fourni au niveau de l'élément rigide (52) et peut s'adapter à la découpe (7) dans la position où la pale (3) est montée sur le tambour (I).

2. Tambour d'une machine à laver selon la revendication 1, **caractérisé en ce que** la découpe (7) comprend une section transversale essentiellement en forme d'un triangle et d'un rectangle.

3. Tambour d'une machine à laver selon l'une quelconque des revendications précédentes, **caractérisé en ce que** ladite pale (3) comprend également un corps creux (10) ouvert en direction de la bande (2) au niveau de la base de pale (3) et une pluralité de nervures intérieures (11) situées à l'intérieur du corps (10).

4. Tambour d'une machine à laver selon la revendication 3, **caractérisé en ce qu'**au moins un trou de vis (13) est défini au niveau d'une extrémité d'une desdites nervures (11), dans lequel une vis peut être hébergée dans une ouverture correspondante (16) définie sur ladite bande cylindrique (2).

5. Tambour d'une machine à laver selon la revendication 3 ou 4, **caractérisé en ce qu'**une patte (14) s'étend vers l'intérieur à partir de ladite bande cylindrique (2) en pouvant s'adapter à l'une des nervures (11).

6. Tambour d'une machine à laver selon l'une quelconque des revendications précédentes, **caractérisé en ce qu'**une pluralité d'écoulements (15) sont définis sur un côté supérieur (17) de ladite pale (3) afin d'obtenir un effet de pluie au cours du processus de lavage.

7. Tambour d'une machine à laver selon l'une quelconque des revendications précédentes, **caractérisé en ce qu'**une longueur totale de la pale (3) est inférieure à une distance comprise entre deux parois d'extrémité circulaires du tambour.

8. Tambour d'une machine à laver selon l'une quelconque des revendications précédentes, **caractérisé en ce que** ladite pale (3) est en plastique.
